# FASCICULE DE BREVET EUROPEEN

(11) **EP 2 125 953 B1**
(45) Date de publication et mention de la délivrance du brevet: **24.08.2016**
(21) Numéro de dépôt: 08762000.1
(22) Date de dépôt: 29.01.2008
(51) Int. Cl.: C08L 77/00, C08L 77/02, C08L 77/06, C08L 67/04, C08J 5/10

(54) **MATERIAU COMPOSITE A BASE DE POLYAMIDE ET DE POLYACIDE LACTIQUE, PROCEDE DE FABRICATION ET UTILISATION**
VERBUNDSTOFFMATERIAL BASIEREND AUF POLYAMID UND POLY(MILCHSÄURE), HERSTELLUNGSVERFAHREN UND VERWENDUNG DAVON
COMPOSITE MATERIAL BASED ON POLYAMIDE AND ON POLY(LACTIC ACID), MANUFACTURING PROCESS AND USE THEREOF

(30) Priorité: 29.01.2007 FR 0752942
(43) Date de publication de la demande: 02.12.2009
(73) Titulaire: ARKEMA FRANCE, 92700 Colombes (FR)
(72) Inventeur: YASUDA, Maho, Takamatsu City Kagawa (JP); AMOUROUX, Nicolas, 51100 Reims (FR); BRULE, Benoît, F-27170 Beaumont Le Roger (FR); DECRAEMER, Nadine, F-27170 Beaumontel (FR); FLAT, Jean-Jacques, F-27170 Goupillieres (FR)
(74) Mandataire: Delprat, Corinne
(86) Numéro de dépôt international: PCT/FR2008/050139
(87) Numéro de publication internationale: WO 2008/107615

(56) Documents cités:
- EP-A- 0 508 730
- WO-A-2005/059031
- US-A- 4 174 358
- DATABASE WPI Week 200440 Thomson Scientific, London, GB; AN 2004-423018 XP002489020 -& JP 2004 051835 A (TOYOTA CHUO KENKYUSHO KK) 19 février 2004 (2004-02-19) cité dans la demande
- DATABASE WPI Week 200421 Thomson Scientific, London, GB; AN 2004-217273 XP002489022 -& JP 2003 277594 A (TORAY IND INC) 2 octobre 2003 (2003-10-02)
- DATABASE WPI Week 199808 Thomson Scientific, London, GB; AN 1998-082830 XP002489021 -& JP 09 316310 A (KANEBO LTD) 9 décembre 1997 (1997-12-09)

## Description

La présente invention se rapporte à un matériau composite à base de polyamides, notamment à base de polyamide 11 (PA11), et de polyacide lactique (PLA).

Les polyamides, en particulier le polyundécanamide PA11, sont des matériaux qui présentent d'excellentes propriétés tant chimiques que mécaniques, propriétés qu'ils conservent de manière remarquable dans le temps.

Toutefois, et à titre d'exemple, compte tenu de son coût relativement élevé, le PA11 n'est que peu employé pour la fabrication de biens de consommation courante comme, par exemple, pour la fabrication de pièces de téléphone portable ou d'ordinateur.

De plus, du fait du caractère semi-cristallin du PA11, il se produit un phénomène de retrait lors de la fabrication des pièces, en particulier injectées, réalisées en seul PA11 avec, pour conséquence, la présence de creux, également connus sous les expressions de "creux de retrait" et "sink marks", plus particulièrement aux endroits où la pièce présente une surépaisseur. La présence de ces creux engendre un marquage des pièces réalisées en PA11, nuisant ainsi à la qualité de surface de ces pièces et donc, de manière plus générale, à leur aspect esthétique, ce qui peut s'avérer gênant pour certaines applications.

Le polyacide lactique, ou PLA, est quant à lui largement utilisé dans la fabrication de fibres, de films et de feuilles, notamment destinés à l'industrie alimentaire.

Si le PLA présente un intérêt majeur du fait de ses propriétés biodégradables et renouvelables, il reste peu employé dans un certain nombre de domaines en raison de ses propriétés mécaniques intrinsèques particulièrement faibles.

En particulier, l'utilisation du PLA pour la fabrication des biens de consommation tels que mentionnés ci-dessus requiert d'améliorer la résistance aux chocs et les propriétés thermomécaniques du PLA.

Pour améliorer de telles propriétés, le document JP 2004-051835 décrit un matériau composite obtenu à partir d'une composition de PLA et de polyamide à matrice PLA. En l'espèce, la composition décrite dans ce document comprenant 100 parties en poids de PLA et de 1 à 100 parties en poids d'un polyamide présentant un module d'élasticité en flexion inférieur à 2GPa, à température ambiante.

Toutefois, pour certaines applications telles que celles mentionnées ci-dessus (biens de consommation), on observe que les propriétés mécaniques et thermomécaniques du matériau composite à matrice PLA décrit dans le document JP 2004-051835 ne sont encore pas entièrement satisfaisantes.

En outre, le matériau composite à matrice PLA décrit dans le document JP 2004-051835 n'est pas non plus satisfaisant en termes de durabilité. En effet, on observe que ce matériau ne tient pas à l'hydrolyse au cours du temps.

Le document EP 508 730 A1 décrit un matériau composite obtenu à partir d' une composition comprenant au moins un polyamide et du polyacide lactique (PLA). Cette composition comprend 100 parties en poids de polyamide et de 1 à 50 parties en poids de PLA.

Le but de la présente invention est donc de remédier aux inconvénients précités et de proposer un matériau composite qui présente simultanément les avantages des polyamides et du polyacide lactique sans leurs inconvénients respectifs.

Ainsi, le matériau composite selon l'invention doit notamment être doté d'une bonne résistance thermomécanique, d'excellentes propriétés mécaniques, et notamment un allongement à la rupture supérieur à 200% à température ambiante, d'une bonne résistance aux chocs ainsi que d'une bonne durabilité (que l'on peut notamment évaluer par une mesure de l'allongement à la rupture après hydrolyse). Il doit en outre permettre de fabriquer des objets dans lesquels la présence de creux de retrait est considérablement réduite de manière à être imperceptible à l'observation à l'oeil nu. En d'autres termes, le retrait après injection doit être le plus faible possible.

La présente invention concerne donc un matériau composite du type précité, c'est-à-dire un matériau composite qui est obtenu à partir d'une composition comprenant un polyamide et du PLA.

Selon l'invention, ledit matériau composite est obtenu à partir d'une composition comprenant - de 50 (exclu) à 70% en poids d'au moins un polyamide,
- de 10 à 50% en poids de PLA, et
- de 5 à 30% en poids
d'au moins un agent compatibilisant.

De manière préférentielle, la composition ne comprend pas de polyoxyméthylène (POM).

La composition peut comprendre un seul polyamide ou un mélange de plusieurs polyamides.

Avantageusement, le polyamide est un polyamide semi-cristallin.

Le terme "semi-cristallin" couvre les homopolyamides ainsi que les copolyamides qui présentent à la fois une température de transition vitreuse Tg et une température de fusion Tf.

Sont notamment visés par l'expression "polyamides semi-cristallins" les homopolyamides aliphatiques qui résultent de la condensation :
- d'un lactame,
- d'un acide alpha,omega-aminocarboxylique aliphatique,
- d'une diamine aliphatique et d'un diacide aliphatique.

A titre d'exemples d'acide alpha,omega-aminocarboxylique aliphatique, on peut citer l'acide aminocaproïque, l'acide amino-7-heptanoïque, l'acide amino-11-undécanoïque et l'acide amino-12-dodécanoïque.

A titre d'exemples de lactame, on peut citer le caprolactame, l'oenantholactame et le lauryllactame.

A titre d'exemples de diamine aliphatique, on peut citer l'hexa-méthylènediamine, la dodécaméthylènediamine et la triméthylhexaméthylène diamine.

A titre d'exemples de diacide aliphatique, on peut citer les acides adipique, azélaïque, subérique, sébacique et dodécanedicarboxylique.

Parmi les polyamides aliphatiques, on peut citer, à titre d'exemple et de façon non limitative, les polyamides suivants : le polycaprolactame (PA6) ; le polyundécanamide (PA11) ; le polylauryllactame (PA12) ; le polybutylène adipamide (PA4.6) ; le polyhexaméthylène adipamide (PA6.6) ; le polyhexaméthylène azélamide (PA6.9) ; le polyhexaméthylène sébaçamide (PA-6.10) ; le polyhexaméthylène dodécanamide (PA6.12) ; le polydécaméthylène dodécanamide (PA10.12) ; le polydécaméthylène sébaçanamide (PA10.10) et le polydodecaméthylène dodécanamide (PA12.12).

Sont également visés par l'expression "polyamides semi-cristallins" les homopolyamides cycloaliphatiques.

On peut notamment citer les polyamides cycloaliphatiques qui résultent de la condensation d'une diamine cycloaliphatique et d'un diacide aliphatique.

A titre d'exemple de diamine cycloaliphatique, on peut citer la 4,4'-methylene-bis(cyclohexylamine), encore dénommée para-bis(aminocyclohexyl)methane ou PACM, la 2,2'-diméthyl-4,4'méthylène-bis(cyclo-hexylamine), encore dénommée bis-(3-méthyl-4-aminocyclohexyl)-méthane ou BMACM.

Ainsi, parmi les polyamides semi-cristallins, on peut citer les polyamides PACM.12, résultant de la condensation du PACM avec le diacide en C12, les BMACM.10 et BMACM.12 résultant de la condensation de la BMACM avec, respectivement, les diacides aliphatiques en C10 et en C12.

Sont également visés par l'expression "polyamides semi-cristallins" les homopolyamides semi-aromatiques qui résultent de la condensation :
- d'une diamine aliphatique et d'un diacide aromatique, tel que l'acide téréphtalique (T) et l'acide isophtalique (I). Les polyamides obtenus sont alors couramment appelés "polyphtalamides" ou PPA ;
- d'une diamine aromatique, telle que la xylylènediamine, et plus particulièrement la métaxylylènediamine (MXD) et d'un diacide aliphatique.

Ainsi, et de manière non limitative, on peut citer les polyamides 6.T, 6.1, MXD.6 ou encore MXD.10.

Comme indiqué précédemment, l'expression "polyamides semi-cristallins" couvre également les copolyamides, qui résultent de la condensation d'au moins deux des groupes de composés énoncés ci-dessus pour l'obtention d'homopolyamides. Ainsi, les copolyamides couvrent notamment les produits de condensation :
- d'au moins deux lactames,
- d'au moins deux acides alpha,omega-aminocarboxyliques aliphatiques,
- d'au moins un lactame et d'au moins un acide alpha,omega-aminocarboxylique aliphatique,
- d'au moins deux diamines et d'au moins deux diacides,
- d'au moins un lactame avec au moins une diamine et au moins un diacide,
- d'au moins un acide alpha,omega-aminocarboxylique aliphatique avec au moins une diamine et au moins un diacide,
la(les) diamine(s) et le(s) diacide(s) pouvant être, indépendamment l'un de l'autre, aliphatiques, cycloaliphatiques ou aromatiques.

Parmi les copolyamides, on peut notamment citer le PA 11/10.T.

Bien évidemment, le polyamide semi-cristallin sera choisi de telle sorte qu'il présente une température de fusion compatible avec les conditions de fabrication et de transformation du matériau composite conforme à l'invention.

La substitution d'une proportion de polyamide par du PLA permet d'obtenir un matériau composite à matrice polyamide qui conserve les remarquables propriétés mécaniques, thermomécaniques et de durabilité du polyamide.

Par ailleurs, en comparaison avec un matériau exclusivement formé de polyamide, cette substitution présente un réel intérêt économique puisqu'elle diminue le coût des matières premières. Cet intérêt économique s'ajoute à l'intérêt technique lié à la limitation du retrait du matériau.

De manière plus particulièrement avantageuse, on peut choisir un polyamide semi-cristallin qui est obtenu à partir de monomères qui sont, en tout ou partie, renouvelables. En particulier, le polyamide pourra être choisi parmi le PA10, le PA11, le PA6.10 et le PA10.10.

Le PA 6.10, ou polyhexaméthylène sébaçamide, est un polyamide résultant de la condensation de l'hexaméthylène diamine avec l'acide sébacique tandis que le PA 10.10, ou polydécaméthylène sébaçanamide, est un polyamide résultant de la condensation de la 1,10-décanediamine avec l'acide sébacique.

Le PA10, le PA11, le PA6.10, le PA10.10 et le PLA étant des polymères obtenus à partir de monomères qui présentent, en tout ou partie, la propriété d'être renouvelables selon la norme ASTM D6866, l'intérêt écologique de la présente invention est indéniable.

De surcroît, cet intérêt écologique est renforcé par le fait qu'en substituant une partie de polyamide par du PLA, le taux d'émission de CO2, qui est produit lors de la fabrication du matériau composite conforme à l'invention, est diminué.

Le polyacide lactique peut être formé à partir de monomères lévogyres (L) et/ou de monomères dextrogyres (D), le taux de monomères (L) et (D) pouvant être quelconque.

Le polyacide lactique peut bien évidemment être un mélange de plusieurs PLA. Il peut être un mélange de PLA lévogyre (PLLA), qui est formé à partir de monomères majoritairement (L), et de PLA dextrogyre (PDLA), qui est formé à partir de monomères majoritairement (D).

Les PLA actuellement disponibles dans le commerce peuvent être mis en oeuvre dans le cadre de la présente invention.

Selon une variante, la composition comprend une teneur en un ou plusieurs des polyamides mentionnés ci-dessus comprise entre 50% et 70% en poids, la valeur de 50% en poids étant exclue.

Dans une première version de l'invention, la composition comprend de 50 à 70% en poids d'au moins un polyamide, de préférence choisi parmi le PA10, le PA11, le PA6.10 et le PA10.10, la valeur de 50% en poids étant exclue.

Dans une deuxième version avantageuse de l'invention, la composition comprend de 30 à 50% en poids de PLA.

Dans une troisième version avantageuse de l'invention, la composition comprend de 5 à 15% en poids d'au moins un agent compatibilisant.

Dans une version particulièrement avantageuse de l'invention, le matériau composite est obtenu à partir des polymères suivants :
- de 50 (valeur exclue) à 70% en poids d'au moins un polyamide, de préférence choisi parmi le PA10, le PA11, le PA6.10 et le PA10.10,
- de 30 à 50% en poids de PLA, et
- de 5 à 15% en poids d'au moins un agent compatibilisant.

Avantageusement, l'agent compatibilisant est une polyoléfine fonctionnalisée comprenant des motifs alpha oléfine et des motifs choisis parmi des motifs époxyde, acide carboxylique et anhydride d'acide carboxylique.

De préférence, la polyoléfine fonctionnalisée est choisie dans le groupe constitué par un terpolymère d'éthylène, d'ester acrylique et d'anhydride maléique, et un terpolymère d'éthylène, de méthylacrylate et de méthacrylate de glycidyle.

Parmi les terpolymères mentionnés ci-dessus, on peut notamment mettre en oeuvre ceux commercialisés, par la société Arkéma France, sous la dénomination commerciale otader®.

Dans une variante de l'invention, la composition peut en outre comprendre des fibres, ces fibres pouvant être des fibres naturelles ou des fibres de synthèse.

On a observé qu'un matériau composite conforme à l'invention dans lequel sont introduites des fibres présente une température de fléchissement sous charge élevée nettement améliorée par rapport à une composition comprenant au moins un polyamide et du PLA, mais à matrice PLA.

La teneur pondérale en fibres est, de manière avantageuse, comprise entre 0 et 60% et, de préférence, comprise entre 5 et 30%, de la composition totale.

De telles fibres peuvent notamment être des fibres de verre, des fibres de carbone, des fibres de kenaf, des fibres de bambou ou encore des fibres de cellulose.

Dans une autre variante de l'invention, la composition peut en outre comprendre des charges minérales, telles que le talc ou le carbonate de calcium.

D'autres charges inorganiques sont envisageables ; des nanocharges, comme la Montmorillonite ou les nanotubes de carbone, peuvent également être utilisées.

L'addition de fibres ou de charges minérales permet de renforcer notamment les propriétés mécaniques telles que le module de flexion, le module de traction ainsi que la rigidité du matériau composite selon l'invention.

Dans une autre variante de l'invention, la composition peut en outre comporter au moins un additif choisi parmi les plastifiants, les modifiants chocs, les colorants, les pigments, les azurants, les anti-oxydants, les agents ignifuges, les stabilisants UV et les polyoléfines non fonctionnalisées.

Une polyoléfine non fonctionnalisée est un homopolymère ou un copolymère d'alpha oléfines ou de dioléfines.

La présente invention concerne également un procédé de fabrication du matériau composite qui vient d'être décrit.

Selon l'invention, ce procédé comprend une étape de mélange des différents polymères selon les techniques classiquement utilisées dans le domaine des polymères et, notamment, par compoundage, par exemple au moyen d'une bi-vis.

En outre, la présente invention se rapporte également à l'utilisation d'un tel matériau composite pour la fabrication d'un objet ainsi qu'à un objet fabriqué à partir d'un tel matériau composite, et notamment à un objet moulé, injecté, extrudé ou thermoformé.

Grâce à la présence de PLA, on observe que les objets réalisés à partir du matériau composite conforme à la présente invention sont de meilleure qualité, notamment parce qu'ils présentent une surface apparente dépourvue, au moins dans le cas d'une observation à l'oeil nu, de creux de retrait ou "sink marks".

La présente invention va être maintenant illustrée par des exemples particuliers de réalisation qui vont être décrits ci-après et qui mettent en oeuvre le PA11 comme polyamide. Il est précisé que ces exemples ne visent en aucun cas à limiter la portée de la présente invention.

### Exemple (essais 1 à 8)

Dans le cadre des essais 1 à 8, le protocole opératoire de préparation des matériaux composites est identique, à l'exception des proportions pondérales des polymères et, le cas échéant, des charges (fibres de verre) mis en oeuvre.

Le polyacide lactique, ou PLA, utilisé dans le cadre des essais 1 à 8 est commercialisé par la société Natureworks, sous la référence 2002D.

Le polyamide 11, ou PA 11, utilisé dans le cadre des essais 1 à 8 est commercialisé par la société Arkéma France, sous la référence Rilsan® BECNO TL.

Le terpolymère utilisé dans le cadre des essais 3, 4, 7 et 8 est un terpolymère d'éthylène (67% pondéral), de méthylacrylate (25% pondéral) et de méthacrylate de glycidyle (8% pondéral), commercialisé par la société Arkéma France, sous la référence Lotader® AX8900.

Les fibres de verre mises en oeuvre dans les essais 7 et 8 présentent une longueur de 250 microns après transformation. Elles sont commercialisées par la société Asahi, sous la référence CS FT 692.

Dans les essais 3 à 8, les différents polymères sous forme de granulés et, le cas échéant, les fibres de verre sont introduits simultanément dans une extrudeuse bi-vis (JSW TEX30) pour être mélangés (débit 15 kg/h, vitesse de rotation 300 tr/min, température de 210°C).

Les proportions pondérales de chacun des polymères et charges mis en oeuvre dans les essais 1 à 8 sont données dans le tableau 1 ci-après.

Les essais 3 et 8 illustrent l'invention, les autres essais sont comparatifs.

**Tableau 1**

| Essai | PA11 (parties en poids) | PLA (parties en poids) | Terpolymère (parties en poids) | Fibres de verre (parties en poids) |
|---|---|---|---|---|
| 1 | 100 | 0 | 0 | 0 |
| 2 | 0 | 100 | 0 | 0 |
| 3 | 60 | 30 | 10 | 0 |
| 4 | 20 | 65 | 15 | 0 |
| 5 | 70 | 30 | 0 | 0 |
| 6 | 30 | 70 | 0 | 0 |
| 7 | 18 | 59 | 14 | 9 |
| 8 | 59 | 18 | 14 | 9 |

Le matériau composite obtenu en sortie de bi-vis se présente sous la forme de granulés.

Les granulés formés à partir des compositions des essais 1 à 6 sont alors injectés, à une température de 230°C dans un moule thermiquement régulé à une température de 40°C. Après un maintien pendant une durée de 30 secondes dans ledit moule, on obtient des haltères répondant aux critères de la norme ASTM1.

Les haltères obtenus sont alors soumis à différents tests qui, sauf indication contraire, ont été conduits à température ambiante, de manière à déterminer les caractéristiques suivantes :
- le retrait longitudinal a été mesuré dans le sens de la longueur de l'haltère. Ce premier critère permet d'appréhender qualitativement l'état de surface des haltères, en particulier la présence visible ou non de "sink marks" : plus faible est le retrait, moins les "sink marks" seront prononcées ;
- le module de traction et l'allongement à la rupture ont été mesurés en utilisant une machine de traction équipée d'un extensomètre (selon ASTM D638), à 1mm/min et 50mm/min, respectivement. Ce deuxième critère permet d'évaluer les propriétés mécaniques ultimes des haltères ;
- pour l'hydrolyse, les haltères ont été immergés pendant 5 jours dans un réservoir fermé contenant de l'eau déionisée régulée à 80°C. Ce troisième critère, combiné au précédent, permet d'évaluer la résistance à l'hydrolyse et, par conséquent, la durabilité des haltères.

Les mesures obtenues sont rassemblées dans le tableau 2 ci-dessous.

**Tableau 2**

| Essai | 1 | 2 | 3 | 4 | 5 | 6 |
|---|---|---|---|---|---|---|
| Retrait longitudinal (%) | 1,0% | 0,26% | 0,57% | 0,36% | 0,62% | 0,32% |
| Module de traction (MPa) | 1000 | 2600 | 1370 | 1950 | 1500 | 2300 |
| Allongement à la rupture (%) | 280% | 8% | 260% | 72% | 260% | 150% |
| Allongement à la rupture après hydrolyse (%) | 280% | <1% | 260% | <1% | 260% | <1% |

Les haltères des essais 3 et 5 obtenus chacun à partir d'un matériau composite conforme à la présente invention sont plus ductiles et plus résistants à l'hydrolyse que l'haltère de l'essai 2 obtenu à partir du seul PLA, tout en ayant un retrait longitudinal moindre et un module de traction plus élevé que l'haltère de l'essai 1 obtenu à partir du seul PA11.

En outre, les haltères des essais 3 et 5 à matrice PA11 présentent des propriétés mécaniques et de durabilité nettement améliorées par rapport, respectivement, aux haltères des essais 4 et 6 à matrice PLA.

Les haltères des essais 3 et 5 obtenus à partir de matériaux composites conformes à l'invention conjuguent donc les avantages des polymères qui les constituent.

Les granulés formés à partir des compositions des essais 7 et 8 sont injectés, à une température de 210°C dans un moule thermiquement régulé à une température de 80°C. Après un refroidissement d'une durée de 40 secondes dans ledit moule, on obtient des barreaux répondant aux critères de la norme ISO 75.

**Tableau 3**

| Essai | 7 | 8 |
|---|---|---|
| HDT 0,45MPa ISO 75 (°C) | 56 | 171 |
| Démoulage | difficile | facile |

Le tableau 3 montre que la température de fléchissement sous contrainte (Heat Distortion Temperature "HDT" mesurée selon la norme ISO 75) est nettement plus élevée pour l'alliage 8 selon l'invention. Il a par ailleurs été noté que le démoulage est plus facile pour l'essai 8.

Le matériau composite selon l'invention peut bien évidemment être utilisé pour la fabrication d'objets, tels que les biens de consommation indiqués ci-avant. A titre non limitatif, on peut citer la fabrication d'objets moulés, d'objets injectés, d'objets extrudés ou d'objets thermoformés. Ces derniers peuvent se présenter sous la forme de films, plaques, et tubes.

Cet objet est défini dans la revendication 10.

## Revendications

1. Matériau composite obtenu à partir d'une composition comprenant :
- de 50 (exclu) à 70% en poids d'au moins un polyamide,
- de 10 à 50% en poids de polyacide lactique (PLA), et
- de 5 à 30% en poids d'au moins un agent compatibilisant.

2. Matériau composite selon la revendication 1, **caractérisé en ce que** le polyamide est un polyamide semi-cristallin, de préférence choisi parmi le PA10, le PA11, le PA6.10 et le PA10.10.

3. Matériau composite selon la revendication 1 ou 2, **caractérisé en ce que** l'agent compatibilisant est une polyoléfine fonctionnalisée comprenant des motifs alpha oléfine et des motifs choisis parmi des motifs époxyde, acide carboxylique et anhydride d'acide carboxylique.

4. Matériau composite selon la revendication 3, **caractérisé en ce que** la polyoléfine fonctionnalisée est choisie dans le groupe constitué par
. un terpolymère d'éthylène, d'ester acrylique et d'anhydride maléique, et
. un terpolymère d'éthylène, de méthylacrylate et de méthacrylate de glycidyle.

5. Matériau composite selon l'une quelconque des revendications 1 à 4, **caractérisé en ce que** la composition comprend en outre des fibres naturelles ou de synthèse.

6. Matériau composite selon la revendication 5, **caractérisée en ce que** les fibres sont des fibres de verre.

7. Matériau composite selon l'une quelconque des revendications 1 à 6, **caractérisé en ce que** la composition comprend en outre au moins un additif choisi parmi les plastifiants, les modifiants chocs, les polyoléfines non fonctionnalisées, les colorants, les pigments, les azurants, les anti-oxydants et les stabilisants UV.

8. Procédé de fabrication du matériau composite selon l'une quelconque des revendications 1 à 7 comprenant une étape de mélange des différents polymères par compoundage.

9. Utilisation du matériau composite selon l'une quelconque des revendications 1 à 7 pour la fabrication d'objets, notamment d'objets moulés, injectés, extrudés ou thermoformés.

10. Objet, notamment objet moulé, objet injecté, objet extrudé ou objet thermoformé, obtenu à partir de la mise en oeuvre du matériau composite selon l'une quelconque des revendications 1 à 7.

## Patentansprüche

1. Verbundwerkstoff, erhalten aus einer Zusammensetzung, umfassend:
- 50 (exklusive) bis 70 Gew.-% mindestens eines Polyamids,
- 10 bis 50 Gew.-% Polymilchsäure (PLA) und
- 5 bis 30 Gew.-% mindestens eines Verträglichkeitsvermittlers.

2. Verbundwerkstoff nach Anspruch 1, **dadurch gekennzeichnet, dass** es sich bei dem Polyamid um ein teilkristallines Polyamid handelt, das vorzugsweise aus PA 10, PA 11, PA 6.10 und PA 10.10 ausgewählt ist.

3. Verbundwerkstoff nach Anspruch 1 oder 2, **dadurch gekennzeichnet, dass** es sich bei dem Verträglichkeitsvermittler um ein funktionalisiertes Poly-olefin, das alpha-Olefin-Einheiten und aus Epoxid-, Carbonsäure- und Carbonsäureanhydrid-Einheiten ausgewählte Einheiten umfasst, handelt.

4. Verbundwerkstoff nach Anspruch 3, **dadurch gekennzeichnet, dass** das funktionalisierte Polyolefin aus der Gruppe bestehend aus
. einem Terpolymer von Ethylen, Acrylsäureester und Maleinsäureanhydrid und
. einem Terpolymer von Ethylen, Methylacrylat und Glycidylmethacrylat
ausgewählt ist.

5. Verbundwerkstoff nach einem der Ansprüche 1 bis 4, **dadurch gekennzeichnet, dass** die Zusammensetzung außerdem Natur- oder Synthesefasern umfasst.

6. Verbundwerkstoff nach Anspruch 5, **dadurch gekennzeichnet, dass** es sich bei den Fasern um Glasfasern handelt.

7. Verbundwerkstoff nach einem der Ansprüche 1 bis 6, **dadurch gekennzeichnet, dass** die Zusammensetzung außerdem mindestens ein Additiv, das aus Weich-machern, Schlagzähigkeitsmodifikatoren, nicht funk-tionalisierten Polyolefinen, Farbstoffen, Pigmen-ten, Aufhellern, Antioxidantien und UV-Stabilisatoren ausgewählt ist, umfasst.

8. Verfahren zur Herstellung des Verbundwerkstoffs nach einem der Ansprüche 1 bis 7, umfassend einen Schritt des Mischens der verschiedenen Polymere durch Compoundierung.

9. Verwendung des Verbundwerkstoffs nach einem der Ansprüche 1 bis 7 zur Herstellung von Gegenständen, insbesondere Formteilen, Spritzgussteilen, Extrudaten oder Thermoformteilen.

10. Gegenstand, insbesondere Formteil, Spritzgussteil, Extrudat oder Thermoformteil, erhalten ausgehend von der Verwendung des Verbundwerkstoffs nach einem der Ansprüche 1 bis 7.

## Claims

1. Composite obtained from a composition comprising:
- 50 (excluded) to 70% by weight of at least one polyamide;
- 10 to 50% by weight of polylactic acid (PLA); and
- 5 to 30% by weight of at least one compatibilizing agent.

2. Composite according to Claim 1, **characterized in that** the polyamide is a semi-crystalline polyamide, preferably chosen from PA-10, PA-11, PA-6,10 and PA-10,10.

3. Composite according to Claim 1 or 2, **characterized in that** the compatibilizing agent is a functionalized polyolefin comprising α-olefin units and units chosen from epoxide, carboxylic acid and carboxylic acid anhydride units.

4. Composite according to Claim 3, **characterized in that** the functionalized polyolefin is chosen from the group composed of
• an ethylene/acrylic ester/maleic anhydride terpolymer; and
• an ethylene/methyl acrylate/glycidyl methacrylate terpolymer.

5. Composite according to any one of Claims 1 to 4, **characterized in that** the composition comprises, in addition, natural or synthetic fibres.

6. Composite according to Claim 5, **characterized in that** the fibres are glass fibres.

7. Composite according to any one of Claims 1 to 6, **characterized in that** the composition comprises, in addition, at least one additive chosen from plasticizers, impact modifiers, unfunctionalized polyolefins, dyes, pigments, brighteners, antioxidants and UV stabilizers.

8. Process for manufacturing the composite as claimed in any one of Claims 1 to 7, comprising a step of blending the various polymers by compounding.

9. Use of the composite as claimed in any one of Claims 1 to 7, for manufacturing articles, especially compression-moulded, injection-moulded, extruded or thermoformed articles.

10. Article, especially a compression-moulded article, an injection-moulded article, an extruded article or a thermoformed article, obtained from the use of the composite as claimed in any one of Claims 1 to 7.
